# EUROPÄISCHE PATENTANMELDUNG

(11) **EP 3 473 371 A1**
(43) Veröffentlichungstag der Anmeldung: **24.04.2019**
(21) Anmeldenummer: 17196765.6
(22) Anmeldetag: 17.10.2017
(51) Int. Cl.: B23K 26/082, G05B 19/19

(54) **BETRIEBSVERFAHREN FÜR EINE LASERANLAGE MIT OPTIMIERTER STEUERUNG**

(71) Anmelder: Siemens Aktiengesellschaft, 80333 München (DE)
(72) Erfinder: Bitterolf, David, 91056 Erlangen (DE); Kurniady, Andreas, 91056 Erlangen (DE); Schäfers, Elmar, 90763 Fürth (DE)

(57) **Zusammenfassung**

Ein Laser (1) einer Laseranlage emittiert einen Laserstrahl (2). Einer übergeordneten Steuereinrichtung (8) ist eine Bahn (B) vorgegeben, die von einem Brennpunkt (4) des Laserstrahls (2) abgefahren werden soll. Mittels mehrerer Spiegel (3) wird der Brennpunkt (4) des Laserstrahls (2) entsprechend der abzufahrenden Bahn (B) positioniert. Die übergeordnete Steuereinrichtung (8) ermittelt anhand der abzufahrenden Bahn (B) für den Spiegeln (3) zugeordnete Lageregler (5) jeweils einen resultierenden Lagesollwert (p1*) und gibt den Lagereglern (5) den jeweiligen resultierenden Lagesollwert (p1*) vor. Die Lageregler (5) positionieren den jeweils zugeordneten Spiegel (3) entsprechend. Die übergeordnete Steuereinrichtung (8) implementiert für die Spiegel (3) und die den Spiegeln (3) zugeordneten Lageregler (5) jeweils eine Modellstruktur (11), welche das dynamische Verhalten des jeweiligen Spiegels (3) und des jeweils zugehörigen Lagereglers (5) modelliert. Sie ermittelt anhand der abzufahrenden Bahn (B) jeweils einen anfänglichen Lagesollwert (p2*), führt den jeweiligen anfänglichen Lagesollwert (p2*) der jeweiligen Modellstruktur (11) zu und ermittelt mittels der jeweiligen Modellstruktur (11) den jeweiligen resultierenden Lagesollwert (p1*).

## Beschreibung

Die vorliegende Erfindung geht aus von einem Betriebsverfahren für eine Laseranlage,
- wobei die Laseranlage einen Laser aufweist, der einen Laserstrahl emittiert,
- wobei einer übergeordneten Steuereinrichtung der Laseranlage eine Bahn vorgegeben ist, die von einem Brennpunkt des Laserstrahls abgefahren werden soll,
- wobei die Laseranlage eine Mehrzahl von Spiegeln aufweist, mittels derer der Brennpunkt des Laserstrahls entsprechend der abzufahrenden Bahn positioniert wird,
- wobei die übergeordnete Steuereinrichtung anhand der abzufahrenden Bahn für den Spiegeln zugeordnete Lageregler jeweils einen resultierenden Lagesollwert ermittelt und den Lagereglern den jeweiligen resultierenden Lagesollwert vorgibt,
- wobei die Lageregler den Spiegel, dem sie jeweils zugeordnet sind, entsprechend dem ihnen jeweils vorgegebenen resultierenden Lagesollwert lagegeregelt positionieren.

Die vorliegende Erfindung geht weiterhin aus von einem Steuerprogramm für eine übergeordnete Steuereinrichtung einer Laseranlage, wobei das Steuerprogramm Maschinencode umfasst, der von der übergeordneten Steuereinrichtung unmittelbar abarbeitbar ist, wobei die Abarbeitung des Maschinencodes durch die übergeordnete Steuereinrichtung bewirkt, dass die übergeordnete Steuereinrichtung
- anhand einer der übergeordneten Steuereinrichtung vorgegebenen, von einem Brennpunkt eines mittels eines Lasers der Laseranlage emittierten Laserstrahls abzufahrenden Bahn für eine Mehrzahl von Spiegeln der Laseranlage, mittels derer der Brennpunkt des Laserstrahls entsprechend der abzufahrenden Bahn positioniert wird, zugeordneten Lagereglern jeweils einen resultierenden Lagesollwert ermittelt und den Lagereglern den jeweiligen resultierenden Lagesollwert vorgibt.

Die vorliegende Erfindung geht weiterhin aus von einer übergeordneten Steuereinrichtung für eine Laseranlage, die mit einem derartigen Steuerprogramm programmiert ist, so dass sie im Betrieb die Laseranlage gemäß einem derartigen Betriebsverfahren steuert.

Die vorliegende Erfindung geht weiterhin aus von einer Laseranlage,
- wobei die Laseranlage einen Laser aufweist, der einen Laserstrahl emittiert,
- wobei die Laseranlage eine Mehrzahl von Spiegeln aufweist, mittels derer ein Brennpunkt des Laserstrahls entsprechend einer abzufahrenden Bahn positionierbar ist,
- wobei die Laseranlage den Spiegeln zugeordnete Lageregler aufweist, welche den Spiegel, dem sie jeweils zugeordnet sind, entsprechend ihnen jeweils vorgegebenen resultierenden Lagesollwerten lagegeregelt positionieren,
- wobei die Laseranlage eine derartige übergeordnete Steuereinrichtung aufweist.

Die oben genannten Gegenstände sind allgemein bekannt. Sie werden beispielsweise bei sogenannten Pulverbettanlagen eingesetzt. Eine Pulverbettanlage weist üblicherweise ein Bett auf, in dem eine Schicht eines Pulvers verteilt wird. Das Pulver kann nach Bedarf ein Metall (beispielsweise Stahl, Aluminium oder Kupfer), ein Kunststoff oder ein anderes Material sein. Sodann wird ein Laser der Pulverbettanlage angesteuert, so dass der Laser einen Laserstrahl emittiert. Über Spiegel wird der Laserstrahl auf bestimmte Stellen der Pulverschicht gelenkt, die dadurch mit dem Laserstrahl belichtet und aufgeheizt werden. An den belichteten Stellen schmilzt das aufgebrachte Pulver und verbindet sich dadurch miteinander und mit dem Untergrund. Sodann wird die nächste Pulverschicht aufgebracht. Sofern diese Pulverschicht aus einem anderen Material besteht als die zuvor aufgebrachte Pulverschicht, wird zuvor überschüssiges Pulver entfernt. Eine typische Anordnung weist meist zwei oder drei Spiegel auf, die zur Positionierung des Laserstrahls entsprechend angesteuert werden. Die vorliegende Erfindung ist aber nicht auf Pulverbettanlagen beschränkt. Sie kann auch bei anderen Laseranlagen eingesetzt werden, bei denen der Laserstrahl in mindestens zwei Richtungen positioniert wird, insbesondere bei Laseranlagen, bei denen weiterhin auch die Laserleistung gesteuert wird.

Die Steuerung für eine Laseranlage umfasst in der Regel eine übergeordnete Steuereinrichtung und der übergeordneten Steuereinrichtung unterlagerte Lageregler für die Spiegel und zusätzlich meist einen Leistungsregler für den Laser. Die Kommunikation der übergeordneten Steuereinrichtung mit den Lagereglern und dem Leistungsregler erfolgt über die übermittelten jeweiligen resultierenden Lagesollwerte bzw. über die übermittelten resultierenden Leistungssollwerte.

Entscheidend für die Qualität des mit der Laseranlage hergestellten Produkts ist insbesondere eine möglichst konstante Streckenenergie des Lasers, d.h. dass die mittels des Lasers aufgebrachte Leistung pro Flächeneinheit möglichst konstant ist. Wird beispielsweise bei einer Pulverbettanlage eine Stelle der aufgebrachten Pulverschicht zu stark belichtet, so wird in diese Stelle zuviel Energie eingebracht, und die Breite des auf geschmolzenen Bereichs geht über den Durchmesser des Laserstrahls hinaus. Die Maße des herzustellenden Werkstücks sind dadurch nicht mehr oder zumindest nicht mehr so exakt einzuhalten. Wird im umgekehrten Fall eine Stelle der aufgebrachten Pulverschicht zu schwach belichtet, reicht die in diese Stelle eingebrachte Energie nicht, um die optimalen Schmelzbedingungen zu erreichen. Ähnliche Probleme stellen sich bei anderen Laseranlagen.

Zur Erreichung einer hohen Produktivität sollte weiterhin die abzufahrende Bahn mit einer möglichst hohen Bahngeschwindigkeit abgefahren werden. Um hierbei eine hohe Konturtreue zu gewährleisten, ist eine hohe Bandbreite für die Positionierung des Laserstrahls erforderlich. Eine hohe Bandbreite ist insbesondere dann wichtig, wenn die abzufahrende Bahn Ecken oder kleine Radien aufweist. Ist die Bandbreite zu gering, muss gegebenenfalls die Dynamik der Bahnführung (Geschwindigkeit, Beschleunigung und/oder Ruck) reduziert werden, um eine gegebene Konturtreue einzuhalten. Ist im Gegenteil die Bandbreite hoch, kann die Bahn schneller gefahren werden, ohne die vorgegebene Bahn signifikant zu verlassen.

Die Bandbreite ist nicht nur isoliert für die Positionierung des jeweiligen Spiegels relevant, sondern auch für die Abstimmung der Spiegel untereinander. Insbesondere sollte die Positionierung des Laserstrahls in allen erforderlichen Raumdimensionen möglichst einheitlich sein. Aufgrund unterschiedlicher Parametrierung der Lageregler oder unterschiedlichen dynamischen Verhaltens der Spiegel kann es jedoch vorkommen, dass die Spiegel mit unterschiedlichem dynamischem Verhalten positioniert werden. In diesem Fall müssen im Stand der Technik die schnelleren Positionierungen auf die Geschwindigkeit der langsamsten Positionierung reduziert werden. Im Ergebnis geht dadurch Dynamik verloren.

Zur Einhaltung der Streckenenergie ist es im Stand der Technik bekannt, den Laser nach Bedarf ein- oder auszuschalten. Eine derartige binäre Ansteuerung ist insofern stets von Nachteil, weil nur eine sehr grobe Anpassung der Streckenenergie möglich ist. Weiterhin ist bekannt, die Ansteuerung des Lasers kontinuierlich oder in mehreren Stufen an die Bahngeschwindigkeit zu koppeln. Wenn die Ansteuerung des Lasers an den Geschwindigkeitssollwert gekoppelt wird, erfolgt die Ansteuerung des Lasers jedoch aufgrund der begrenzten Dynamik bei der Positionierung möglicherweise zu früh. Wenn die Ansteuerung des Lasers an den Geschwindigkeitsistwert gekoppelt wird, erfolgt die Ansteuerung des Lasers aufgrund der Reaktionszeit des Lasers oftmals zu spät.

Im Stand der Technik ist der übergeordneten Steuereinrichtung die Parametrierung der Lageregler und die Dynamik der Spiegel nicht bekannt. Aus Sicht der übergeordneten Steuereinrichtung handelt es sich vielmehr um "black boxes". Dadurch kann zum einen die Reglercharakteristik des jeweiligen Lagereglers nicht mehr angepasst oder berücksichtigt werden. Vielmehr muss gegebenenfalls die Dynamik (Geschwindigkeit, Beschleunigung und/oder Ruck) reduziert werden, um die Kontur einzuhalten. Dadurch ergibt sich ein Verlust an Produktivität. Ebenso ist es im Stand der Technik nicht möglich, die Bandbreite der verschiedenen Spiegel und deren Regelungen aneinander anzugleichen. Es verbleibt aus Sicht der übergeordneten Steuereinrichtung als einzige Möglichkeit, die resultierenden Lagesollwerte so zu ermitteln, dass die Dynamik der langsamsten Achse ausreicht, um der Bewegung zu folgen. Auch dies bedeutet einen Verlust an Produktivität.

Die Aufgabe der vorliegenden Erfindung besteht darin, Möglichkeiten zu schaffen, mittels derer die Produktivität der Laseranlage optimiert werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 11.

Erfindungsgemäß wird ein Betriebsverfahren der eingangs genannten Art dadurch ausgestaltet,
- dass die übergeordnete Steuereinrichtung für die Spiegel und die den Spiegeln zugeordneten Lageregler jeweils eine Modellstruktur implementiert, welche das dynamische Verhalten des jeweiligen Spiegels und des jeweils zugehörigen Lagereglers modelliert, und
- dass die übergeordnete Steuereinrichtung anhand der von dem Brennpunkt des Laserstrahls abzufahrenden Bahn jeweils einen anfänglichen Lagesollwert ermittelt, den jeweiligen anfänglichen Lagesollwert der jeweiligen Modellstruktur zuführt und mittels der jeweiligen Modellstruktur den jeweiligen resultierenden Lagesollwert ermittelt.

Dadurch kann das dynamische Verhalten des jeweiligen Spiegels und des jeweils zugehörigen Lagereglers auf Seiten der übergeordneten Steuereinrichtung bei der Ermittlung des jeweiligen resultierenden Lagesollwertes berücksichtigt werden.

Die jeweilige Modellstruktur kann beispielsweise derart implementiert sein,
- dass die jeweilige Modellstruktur eingangsseitig einen jeweiligen Knotenpunkt und ein dem jeweiligen Knotenpunkt nachgeordnetes jeweiliges Modell aufweist,
- dass die jeweilige Modellstruktur in dem jeweiligen Knotenpunkt den jeweiligen anfänglichen Lagesollwert und einen Rückkoppelwert zu dem jeweiligen resultierenden Lagesollwert verknüpft,
- dass die jeweilige Modellstruktur in dem Modell anhand des jeweiligen resultierenden Lagesollwertes einen jeweiligen erwarteten Lageistwert ermittelt und
- dass die jeweilige Modellstruktur den jeweiligen Rückkoppelwert unter Verwertung des jeweiligen erwarteten Lageistwertes ermittelt.

Diese Vorgehensweise ist als solche bekannt. Es kann beispielsweise auf die DE 10 2005 048 390 A1 verwiesen werden.

Vorzugsweise ist die übergeordnete Steuereinrichtung auch einem Leistungsregler für den Laser übergeordnet. In diesem Fall ermittelt die übergeordnete Steuereinrichtung zusätzlich einen resultierenden Leistungssollwert für eine von dem Laser abzugebende Leistung und gibt den resultierenden Leistungssollwert dem Leistungsregler vor. Der Leistungsregler regelt sodann die Leistung des Laserstrahls entsprechend dem ihm vorgegebenen resultierenden Leistungssollwert.

Vorzugsweise ermittelt die übergeordnete Steuereinrichtung anhand der mittels der Modellstrukturen ermittelten erwarteten Lageistwerte eine Geschwindigkeit, mit der der Brennpunkt des Laserstrahls positioniert wird. Dadurch ist die übergeordnete Steuereinrichtung in der Lage, sodann den resultierenden Leistungssollwert unter Verwendung der ermittelten Geschwindigkeit zu ermitteln. Dies nutzt den Umstand, dass durch die Modellstrukturen jeweils die erwartete Geschwindigkeit ermittelt werden kann und somit direkt innerhalb der übergeordneten Steuereinrichtung zur Verfügung steht, wobei die erwartete Geschwindigkeit mit hoher Genauigkeit mit der tatsächlichen Geschwindigkeit des Brennpunkts übereinstimmt.

Es ist möglich, dass die übergeordnete Steuereinrichtung den resultierenden Leistungssollwert direkt ermittelt. Soweit erforderlich, ist es jedoch möglich, dass die übergeordnete Steuereinrichtung - analog zu den Modellstrukturen für die Spiegel und die den Spiegeln zugeordneten Lageregler -
- für den Laser und den dem Laser zugeordneten Leistungsregler eine weitere Modellstruktur implementiert, welche das dynamische Verhalten des Lasers und des zugehörigen Leistungsreglers modelliert, und
- anhand der Geschwindigkeit, mit der der Brennpunkt des Laserstrahls positioniert wird, einen anfänglichen Leistungssollwert ermittelt, den anfänglichen Leistungssollwert der weiteren Modellstruktur zuführt und mittels der weiteren Modellstruktur den resultierenden Leistungssollwert ermittelt.

Dadurch kann auch das dynamische Verhalten des Lasers und des zugehörigen Leistungsreglers bei der Ermittlung des resultierenden Leistungssollwerts berücksichtigt werden.

Vorzugsweise ist vorgesehen, dass für Frequenzen oberhalb einer Grenzfrequenz die mittels der jeweiligen Modellstruktur ermittelten jeweiligen resultierenden Lagesollwerte gegenüber den gleichen Frequenzanteilen des jeweiligen anfänglichen Lagesollwerts verstärkt sind. Dadurch kann die Dynamik, mit der der jeweilige Spiegel positioniert wird, verbessert werden.

Gleiches gilt gegebenenfalls für das Verhältnis des resultierenden Leistungssollwerts zum anfänglichen Leistungssollwert.

Vorzugsweise sind die Modellstrukturen für die Lageregler derart aufeinander abgestimmt, dass die Spiegel mit der gleichen Dynamik positioniert werden. Dadurch kann beim Positionieren des Brennpunkts des Laserstrahls eine in allen Dimensionen einheitliche Konturtreue erreicht werden.

Vorzugsweise weist das aus dem jeweiligen Spiegel, dem jeweils zugeordneten Lageregler und der jeweiligen Modellstruktur bestehende System eine Bandbreite auf, die mindestens so groß wie die Bandbreite des nur aus dem jeweiligen Spiegel und dem jeweils zugeordneten Lageregler bestehenden Systems ist. Dadurch werden im Ergebnis die Bandbreite und damit die Dynamik, mit welcher der jeweilige Spiegel den Brennpunkt des Laserstrahls positioniert, verbessert.

Prinzipiell können die Modelle der Modellstrukturen beliebig aufgebaut sein. Vorzugsweise implementieren sie jeweils einen Zustandsregler.

Es ist möglich, dass den Lagereglern ein jeweiliger Drehzahlregler unterlagert ist. Dies führt zu einer verbesserten Dynamik der Regelung. Es ist sogar möglich, dass zusätzlich den Drehzahlreglern ein jeweiliger Stromregler unterlagert ist. Dies führt zu einer noch weiteren Verbesserung der Dynamik der Regelung.

In vielen Fällen ist die Anzahl an Spiegeln zwei. Sie kann aber auch mehr betragen, insbesondere drei sein.

Die Aufgabe wird weiterhin durch ein Steuerprogramm mit den Merkmalen des Anspruchs 12 gelöst. Vorteilhafte Ausgestaltungen des Steuerprogramm sind Gegenstand des abhängigen Anspruchs 13.

Erfindungsgemäß bewirkt die Abarbeitung des Maschinencodes durch die übergeordnete Steuereinrichtung, dass die übergeordnete Steuereinrichtung - zusätzlich zu den eingangs in Verbindung mit dem Steuerprogramm genannten Maßnahmen -
- für die Spiegel und die den Spiegeln zugeordneten Lageregler jeweils eine Modellstruktur implementiert, welche das dynamische Verhalten des jeweiligen Spiegels und des jeweils zugehörigen Lagereglers modelliert, und
- anhand der von dem Brennpunkt des Laserstrahls abzufahrenden Bahn jeweils einen anfänglichen Lagesollwert ermittelt, den jeweiligen anfänglichen Lagesollwert der jeweiligen Modellstruktur zuführt und mittels der jeweiligen Modellstruktur den jeweiligen resultierenden Lagesollwert ermittelt.

Die vorteilhaften Ausgestaltungen des Steuerprogramms und die dadurch erreichten Vorteile korrespondieren im wesentlichen mit denen des Betriebsverfahrens.

Die Aufgabe wird weiterhin durch eine übergeordnete Steuereinrichtung mit den Merkmalen des Anspruchs 14 gelöst. Erfindungsgemäß ist eine Steuereinrichtung der eingangs genannten Art mit einem erfindungsgemäßen Steuerprogramm programmiert, so dass sie im Betrieb die Laseranlage gemäß einem erfindungsgemäßen Betriebsverfahren steuert.

Die Aufgabe wird weiterhin durch eine Laseranlage mit den Merkmalen des Anspruchs 15 gelöst. Erfindungsgemäß weist eine Laseranlage der eingangs genannten Art eine erfindungsgemäß ausgebildete übergeordnete Steuereinrichtung auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Laseranlage,
- FIG 2: einen Teil einer Regelstruktur,
- FIG 3: vollständige Regelstrukturen,
- FIG 4: den Aufbau einer Modellstruktur,
- FIG 5: Frequenzverhalten und
- FIG 6: eine Sprungantwort.

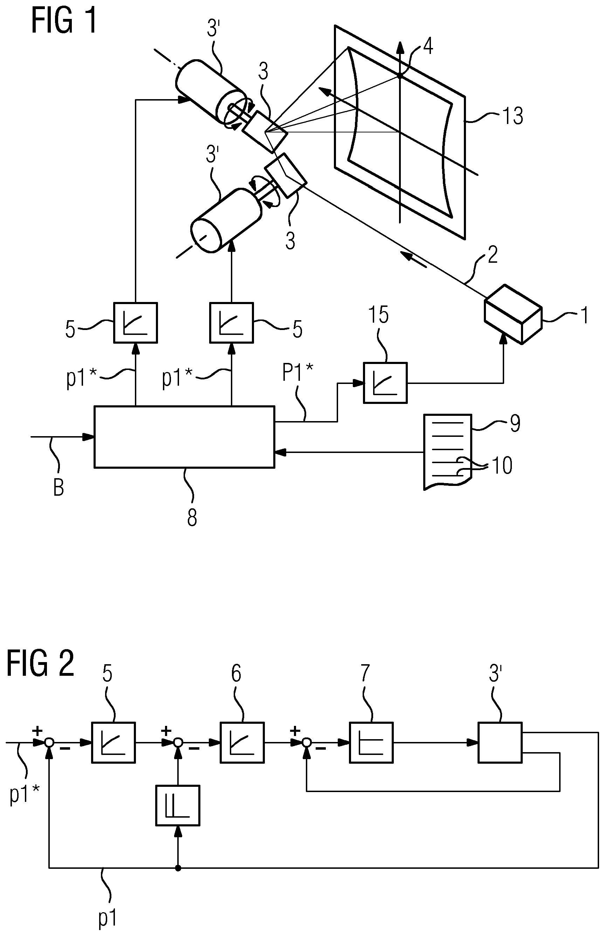

Gemäß FIG 1 weist eine Laseranlage einen Laser 1 auf. Der Laser 1 emittiert einen Laserstrahl 2. Über eine Mehrzahl von Spiegeln 3 wird ein Brennpunkt 4 des Laserstrahls 2 entsprechend einer abzufahrenden Bahn B positioniert. Die Spiegel werden zu diesem Zweck durch entsprechende Antriebe 3' angesteuert. Minimal sind zwei Spiegel 3 vorhanden. In manchen Fällen sind aber auch mehr als zwei Spiegel 3 vorhanden, beispielsweise drei Spiegel 3. Zum Positionieren der Spiegel 3 und damit im Ergebnis des Brennpunkts 4 ist den Spiegeln 3 jeweils ein Lageregler 5 zugeordnet, der den jeweiligen Spiegel 3 entsprechend einem jeweiligen resultierenden Lagesollwert p1* positioniert. An dieser Stelle und auch nachfolgend wird nicht zwischen den einzelnen resultierenden Lagesollwerten p1* für die einzelnen Spiegel 3 unterschieden. Die resultierenden Lagesollwerte p1* für die einzelnen Spiegel 3 werden jedoch individuell für den jeweiligen Spiegel 3 ermittelt. Sie können also von Spiegel 3 zu Spiegel 3 voneinander verschiedene Werte aufweisen.

Es ist möglich, dass die Lageregler 5 den jeweiligen Spiegel 3 bzw. den zugehörigen Antrieb 3' direkt ansteuern. Alternativ ist es möglich, dass den Lagereglern 5 entsprechend der Darstellung in FIG 2 ein jeweiliger Drehzahlregler 6 unterlagert ist. Dem Drehzahlregler 6 kann gegebenenfalls seinerseits ein Stromregler 7 unterlagert sein. Die entsprechende Reglerstruktur, die Fachleuten als solche allgemein bekannt ist, ist in FIG 2 für einen der Lageregler 5 dargestellt. Die entsprechende Struktur kann nach Bedarf bei mehreren Lagereglern 5 realisiert sein.

Die resultierenden Lagesollwerte p1* werden den Lagereglern 5 von einer übergeordneten Steuereinrichtung 8 vorgegeben. Die Vorgabe der resultierenden Lagesollwerte p1* erfolgt in der Regel getaktet, wobei der Arbeitstakt oftmals unterhalb von 1 ms liegt. Der übergeordneten Steuereinrichtung 8 wiederum ist die Bahn B vorgegeben, die von dem Brennpunkt 4 des Laserstrahls 2 abgefahren werden soll. Anhand der abzufahrenden Bahn B ermittelt die übergeordnete Steuereinrichtung 8 für den jeweiligen Arbeitstakt die jeweiligen resultierenden Lagesollwerte p1*, die sie sodann individuell dem jeweiligen Lageregler 5 vorgibt.

Die übergeordnete Steuereinrichtung 8 ist mit einem Steuerprogramm 9 programmiert. Aufgrund der Programmierung mit dem Steuerprogramm 9 steuert die übergeordnete Steuereinrichtung 8 im Betrieb die Laseranlage gemäß einem Betriebsverfahren das nachstehend näher erläutert. Das Steuerprogramm 9 umfasst Maschinencode 10, der von der übergeordneten Steuereinrichtung 8 unmittelbar abarbeitbar ist. Die Abarbeitung des Maschinencodes 10 durch die übergeordnete Steuereinrichtung 8 bewirkt die entsprechende Steuerung der Laseranlage durch die übergeordnete Steuereinrichtung 8.

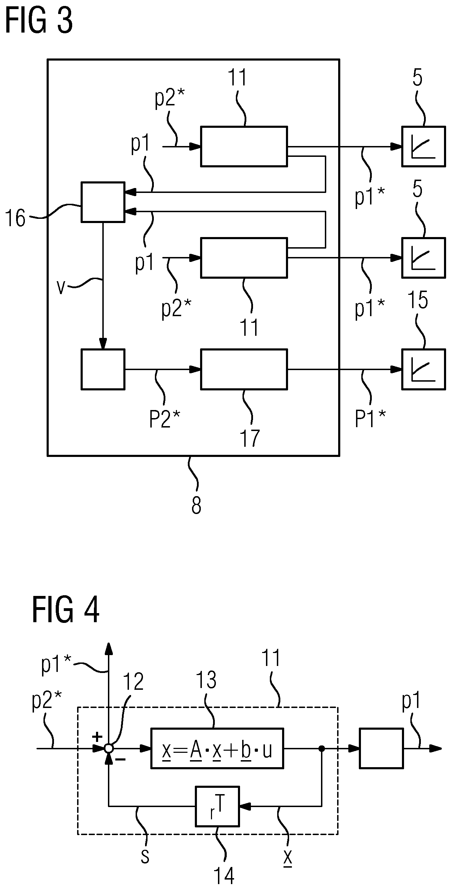

Aufgrund der Programmierung mit dem Steuerprogramm 9 implementiert die übergeordnete Steuereinrichtung 8 entsprechend der Darstellung in FIG 3 für die Spiegel 3 und die den Spiegeln 3 zugeordneten Lageregler 5 jeweils eine Modellstruktur 11. Die jeweilige Modellstruktur 11 modelliert das dynamische Verhalten des jeweiligen Spiegels 3 und des jeweils zugehörigen Lagereglers 5.

Die Modellstrukturen 11 sind in der Praxis meist Softwareblöcke, also nicht in Hardware vorhanden. Die Modellstrukturen 11 sind in der Regel gleichartig aufgebaut. Nachstehend wird daher in Verbindung mit FIG 4 nur eine der Modellstrukturen 11 näher erläutert.

Gemäß FIG 4 weist die jeweilige Modellstruktur 11 eingangsseitig einen Knotenpunkt 12 und ein dem Knotenpunkt 12 nachgeordnetes Modell 13 auf. Die übergeordnete Steuereinrichtung 8 ermittelt anhand der ihr bekannten Bahn B einen jeweiligen anfänglichen Lagesollwert p2*. Der anfängliche Lagesollwert p2* ist durch einen jeweiligen Punkt auf der Bahn B bestimmt. Die übergeordnete Steuereinrichtung 8 führt den jeweiligen anfänglichen Lagesollwert p2* der jeweiligen Modellstruktur 11 zu, genauer dem Knotenpunkt 12 der jeweiligen Modellstruktur 11. Mittels der jeweiligen Modellstruktur 11 ermittelt die übergeordnete Steuereinrichtung 8 den jeweiligen resultierenden Lagesollwert p1*.

Intern können die Modellstruktur 11 und insbesondere das Modell 13 nach Bedarf ausgebildet sein. Beispielsweise kann das Modell 13 entsprechend der Darstellung in FIG 4 einen Zustandsregler implementieren. In diesem Fall ist das Modell 13 ein Streckenmodell. Das Modell 13 ermittelt als Zustand X eine vektorielle Größe. Eine der Vektorkomponenten des Zustands X ist der vorgegebene anfängliche Lagesollwert p2*. Die Modellstruktur 11 weist weiterhin einen Zustandsregler auf. Der Zustandsregler ist in Form einer Rückführung des ermittelten Zustands X über ein Rückführelement 14 realisiert. Mittels des Rückführelements 14 wird der mittels des Modells 13 ermittelte Zustand X auf das Modell 13 rückgekoppelt. Insbesondere wird mittels des Rückführelements 14 anhand des Zustands X ein Skalar s ermittelt. Der Skalar s stellt einen Rückkoppelwert dar, der im Knotenpunkt 12 auf den vorgegebenen anfänglichen Lagesollwert p2* aufaddiert oder von ihm subtrahiert wird. Durch die Addition bzw. Subtraktion ergibt sich der resultierende Lagesollwert p1*.

Zum Ermitteln des Zustands X kann das Modell 13 insbesondere algebraische Gleichungen und lineare Differenzialgleichungen umfassen. Details dieser Vorgehensweise sind insbesondere in der DE 10 2005 048 390 A1 ausführlich erläutert. Auch die Nomenklatur wurde von dort übernommen, vergleiche in der DE 10 2005 048 390 A1 die dortige FIG 2 und die zugehörigen Ausführungen in den dortigen Absätzen 33 bis 40. Im Ergebnis ermittelt somit die Modellstruktur 11 in dem Modell 13 anhand des resultierenden Lagesollwerts p1* einen erwarteten Lageistwert p1. Der erwartete Lageistwert p1 ist ebenfalls Bestandteil des Zustands X. Weiterhin ermittelt dadurch die Modellstruktur 11 den Rückkoppelwert s unter Verwertung des erwarteten Lageistwertes p1. Der ermittelte erwartete Lageistwert p1 stimmt, sofern die zugehörige Modellstruktur 11 und insbesondere deren Modell 13 das dynamische Verhalten des zugehörigen Spiegels 3 und des dem entsprechenden Spiegel 3 zugeordneten Lagereglers 5 gut modelliert, mit hoher Genauigkeit mit dem tatsächlichen Lageistwert p2 überein.

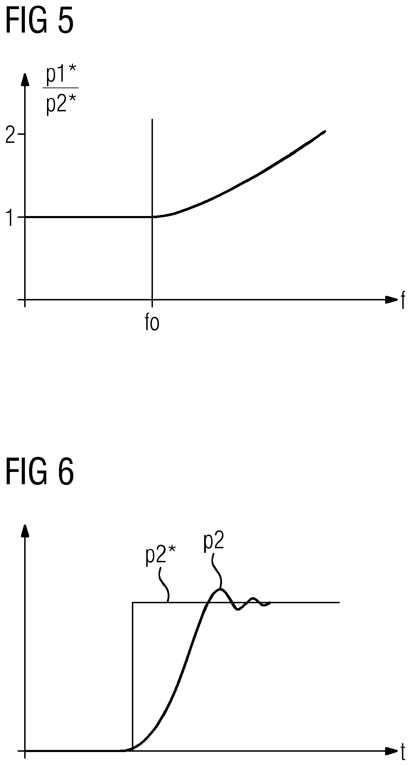

Durch die Modellstruktur 11 können das resultierende Frequenzverhalten und damit die Dynamik der entsprechenden Lageregelung verbessert werden. Insbesondere wird entsprechend der Darstellung in FIG 5 erreicht, dass für Frequenzen f oberhalb einer Grenzfrequenz f0 die mittels der jeweiligen Modellstruktur 11 ermittelten jeweiligen resultierenden Lagesollwerte p1* gegenüber den gleichen Frequenzanteilen des jeweiligen anfänglichen Lagesollwerts p2* verstärkt sind. Die jeweilige Modellstruktur 11 bildet also sozusagen eine Art Vorfilter, mittels dessen hohe Frequenzanteile des jeweiligen anfänglichen Lagesollwerts p2* verstärkt werden. Anders ausgedrückt wird dadurch - zumindest in der Regel - erreicht, dass das aus dem jeweiligen Spiegel 3, dem jeweils zugeordneten Lageregler 5 und der jeweiligen Modellstruktur 11 bestehende System eine Bandbreite aufweist, die größer als die Bandbreite des nur aus dem jeweiligen Spiegel 3 und dem jeweils zugeordneten Lageregler 5 bestehenden Systems ist. Zumindest aber wird die Bandbreite durch das Hinzufügen der Modellstruktur 11 nicht verringert.

Die Modellstrukturen 11 können unabhängig voneinander implementiert und vor allem unabhängig voneinander parametriert werden. In der Praxis sollte jedoch insbesondere bei der Parametrierung darauf geachtet werden, dass die Modellstrukturen 11 für die Lageregler 5 derart aufeinander abgestimmt sind, dass die Spiegel 3 mit der gleichen Dynamik positioniert werden. Wenn also entsprechend der Darstellung in FIG 6 für eines der aus dem jeweiligen Spiegel 3, dem zugeordneten Lageregler 5 und der zugehörigen Modellstruktur 11 bestehenden Systeme eine Sprungantwort des tatsächlichen Lageistwertes p2 auf eine sprunghafte Änderung des anfänglichen Lagesollwertes p2* ein bestimmtes Verhalten als Funktion der Zeit t zeigt, so sollte ein und dasselbe Verhalten auch bei den anderen Spiegeln 3 realisiert sein. Die einzelnen Modelle 11 können also verschieden voneinander sein. Ihr Ergebnis sollte jedoch aufeinander abgestimmt sein.

Die FIG 1 zeigt nicht nur das Grundprinzip der vorliegenden Erfindung sondern bereits eine Ausgestaltung. Insbesondere ermittelt die übergeordnete Steuereinrichtung 8 gemäß FIG 1 nicht nur die resultierenden Lagesollwerte p1*, sondern zusätzlich auch einen resultierenden Leistungssollwert P1*. Der resultierende Leistungssollwert P1* gibt eine Sollleistung an, mit welcher der Laser 1 betrieben werden soll, welche Leistung also der von dem Laser 1 emittierte Laserstrahl 2 aufweisen soll. Die übergeordnete Steuereinrichtung 8 gibt den resultierenden Leistungssollwert P1* einem Leistungsregler 15 für den Laser 1 vor. Der Leistungsregler 15 regelt sodann die Leistung des Laserstrahls 2 entsprechend dem ihm vorgegebenen resultierenden Leistungssollwert P1*. Die übergeordnete Steuereinrichtung 8 kann den resultierenden Leistungssollwert P1* beispielsweise anhand der Geschwindigkeit v ermitteln, mit welcher der Brennpunkt 4 des Laserstrahls 2 entlang der Bahn B positioniert wird. Insbesondere kann die übergeordnete Steuereinrichtung 8 den resultierenden Leistungssollwert P1* derart ermitteln, dass eine vom Laser 1 tatsächlich abgegebene Leistung proportional zur Geschwindigkeit v ist. Zur Ermittlung der Geschwindigkeit v verwertet die übergeordnete Steuereinrichtung 8 entsprechend der Darstellung in FIG 3 in einem Ermittlungsblock 16 vorzugsweise die mittels der Modellstrukturen 11 ermittelten erwarteten Lageistwerte p1. Insbesondere kann die übergeordnete Steuereinrichtung 8 in dem Ermittlungsblock 16 eine Differentiation der erwarteten Lageistwerte p1 nach der Zeit t durchführen und so die Geschwindigkeit v ermitteln.

In vielen Fällen ist diese Vorgehensweise vollkommen ausreichend. Es kann also direkt die ermittelte Geschwindigkeit v mit einem konstanten Faktor multipliziert werden, wobei das Produkt den resultierenden Leistungssollwert P1* ergibt. In manchen Fällen kann es jedoch erforderlich sein, dass das Produkt der ermittelten Geschwindigkeit v mit dem konstanten Faktor noch nicht mit den resultierenden Leistungssollwert P1* korrespondiert, sondern erst mit einem anfänglichen Leistungssollwert P2*. In diesem Fall kann die übergeordnete Steuereinrichtung 8 entsprechend der Darstellung in FIG 3 für den Laser 1 und den dem Laser 1 zugeordneten Leistungsregler 15 eine Modellstruktur 17 implementieren, welche das dynamische Verhalten des Lasers 1 und des zugehörigen Leistungsreglers 15 modelliert. Die Modellstruktur 17 wird nachstehend zur sprachlichen Unterscheidung von den Modellstrukturen 11 für die Spiegel 3 und deren Lageregler 5 als weitere Modellstruktur 17 bezeichnet.

In diesem Fall führt die übergeordnete Steuereinrichtung 8 entsprechend der Darstellung in FIG 3 den anfänglichen Leistungssollwert P2* der weiteren Modellstruktur 17 zu. Mittels der weiteren Modellstruktur 17 ermittelt die übergeordnete Steuereinrichtung 8 dann den resultierenden Leistungssollwert P1*. Sowohl der Aufbau der weiteren Modellstruktur 17 als auch Vorgehensweise zur Ermittlung des resultierenden Leistungssollwerts P1* sind völlig analog zur Vorgehensweise, welche obenstehend für Modelle 11 zur Ermittlung der resultierenden Lagesollwerte p1* erläutert wurde.

Zusammengefasst betrifft die vorliegende Erfindung somit folgenden Sachverhalt:
Ein Laser 1 einer Laseranlage emittiert einen Laserstrahl 2. Einer übergeordneten Steuereinrichtung 8 der Laseranlage ist eine Bahn B vorgegeben, die von einem Brennpunkt 4 des Laserstrahls 2 abgefahren werden soll. Mittels einer Mehrzahl von Spiegeln 3 der Laseranlage wird der Brennpunkt 4 des Laserstrahls 2 entsprechend der abzufahrenden Bahn B positioniert. Die übergeordnete Steuereinrichtung 8 ermittelt anhand der abzufahrenden Bahn B für den Spiegeln 3 zugeordnete Lageregler 5 jeweils einen resultierenden Lagesollwert p1* und gibt den Lagereglern 5 den jeweiligen resultierenden Lagesollwert p1* vor. Die Lageregler 5 positionieren den jeweils zugeordneten Spiegel 3 entsprechend. Die übergeordnete Steuereinrichtung 8 implementiert für die Spiegel 3 und die den Spiegeln 3 zugeordneten Lageregler 5 jeweils eine Modellstruktur 11, welche das dynamische Verhalten des jeweiligen Spiegels 3 und des jeweils zugehörigen Lagereglers 5 modelliert. Sie ermittelt anhand der von dem Brennpunkt 4 des Laserstrahls 2 abzufahrenden Bahn B jeweils einen anfänglichen Lagesollwert p2*, führt den jeweiligen anfänglichen Lagesollwert p2* der jeweiligen Modellstruktur 11 zu und ermittelt mittels der jeweiligen Modellstruktur 11 den jeweiligen resultierenden Lagesollwert p1*.

Die vorliegende Erfindung weist viele Vorteile auf. Zum einen wird die Bandbreite, mit welcher die einzelnen Spiegel 3 und damit der Brennpunkt 4 des Laserstrahls 2 positioniert werden können, vergrößert. Weiterhin werden die Bandbreiten aneinander angeglichen. Weiterhin wird auch die Ansteuerung des Lasers 1 optimiert. Schließlich ist die erfindungsgemäße Lösung ohne größere Eingriffe in die Steuerung als Ganzes realisierbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Laseranlage,
- wobei die Laseranlage einen Laser (1) aufweist, der einen Laserstrahl (2) emittiert,
- wobei einer übergeordneten Steuereinrichtung (8) der Laseranlage eine Bahn (B) vorgegeben ist, die von einem Brennpunkt (4) des Laserstrahls (2) abgefahren werden soll,
- wobei die Laseranlage eine Mehrzahl von Spiegeln (3) aufweist, mittels derer der Brennpunkt (4) des Laserstrahls (2) entsprechend der abzufahrenden Bahn (B) positioniert wird,
- wobei die übergeordnete Steuereinrichtung (8) anhand der abzufahrenden Bahn (B) für den Spiegeln (3) zugeordnete Lageregler (5) jeweils einen resultierenden Lagesollwert (p1*) ermittelt und den Lagereglern (5) den jeweiligen resultierenden Lagesollwert (p1*) vorgibt,
- wobei die Lageregler (5) den Spiegel (3), dem sie jeweils zugeordnet sind, entsprechend dem ihnen jeweils vorgegebenen resultierenden Lagesollwert (p1*) lagegeregelt positionieren,
**dadurch gekennzeichnet,**
- **dass** die übergeordnete Steuereinrichtung (8) für die Spiegel (3) und die den Spiegeln (3) zugeordneten Lageregler (5) jeweils eine Modellstruktur (11) implementiert, welche das dynamische Verhalten des jeweiligen Spiegels (3) und des jeweils zugehörigen Lagereglers (5) modelliert, und
- **dass** die übergeordnete Steuereinrichtung (8) anhand der von dem Brennpunkt (4) des Laserstrahls (2) abzufahrenden Bahn (B) jeweils einen anfänglichen Lagesollwert (p2*) ermittelt, den jeweiligen anfänglichen Lagesollwert (p2*) der jeweiligen Modellstruktur (11) zuführt und mittels der jeweiligen Modellstruktur (11) den jeweiligen resultierenden Lagesollwert (p1*) ermittelt.

2. Betriebsverfahren nach Anspruch 1,
**dadurch gekennzeichnet,**
- **dass** die jeweilige Modellstruktur (11) eingangsseitig einen jeweiligen Knotenpunkt (12) und ein dem jeweiligen Knotenpunkt (12) nachgeordnetes jeweiliges Modell (13) aufweist,
- **dass** die jeweilige Modellstruktur (11) in dem jeweiligen Knotenpunkt (12) den jeweiligen anfänglichen Lagesollwert (p2*) und einen Rückkoppelwert (s) zu dem jeweiligen resultierenden Lagesollwert (p1*) verknüpft,
- **dass** die jeweilige Modellstruktur (11) in dem Modell (13) anhand des jeweiligen resultierenden Lagesollwertes (p1*) einen jeweiligen erwarteten Lageistwert (p1) ermittelt und
- **dass** die jeweilige Modellstruktur (11) den jeweiligen Rückkoppelwert (s) unter Verwertung des jeweiligen erwarteten Lageistwertes (p1) ermittelt.

3. Betriebsverfahren nach Anspruch 1 oder 2,
**dadurch gekennzeichnet,**
**dass** die übergeordnete Steuereinrichtung (8) zusätzlich einen resultierenden Leistungssollwert (P1*) für eine von dem Laser (1) abzugebende Leistung ermittelt, dass die übergeordnete Steuereinrichtung (8) den resultierenden Leistungssollwert (P1*) einem Leistungsregler (15) für den Laser (1) vorgibt und dass der Leistungsregler (15) die Leistung des Laserstrahls (2) entsprechend dem ihm vorgegebenen resultierenden Leistungssollwert (P1*) regelt.

4. Betriebsverfahren nach Anspruch 2 und 3,
**dadurch gekennzeichnet,**
**dass** die übergeordnete Steuereinrichtung (8) anhand der mittels der Modellstrukturen (11) ermittelten erwarteten Lageistwerte (p1) eine Geschwindigkeit (v) ermittelt, mit der der Brennpunkt (4) des Laserstrahls (2) positioniert wird, und den resultierenden Leistungssollwert (P1*) unter Verwendung der ermittelten Geschwindigkeit (v) ermittelt.

5. Betriebsverfahren nach Anspruch 4,
**dadurch gekennzeichnet,**
- **dass** die übergeordnete Steuereinrichtung (8) für den Laser (1) und den dem Laser (1) zugeordneten Leistungsregler (15) eine weitere Modellstruktur (17) implementiert, welche das dynamische Verhalten des Lasers (1) und des zugehörigen Leistungsreglers (15) modelliert, und
- **dass** die übergeordnete Steuereinrichtung (8) anhand der Geschwindigkeit (v), mit der der Brennpunkt (4) des Laserstrahls (2) positioniert wird, einen anfänglichen Leistungssollwert (P2*) ermittelt, den anfänglichen Leistungssollwert (P2*) der weiteren Modellstruktur (17) zuführt und mittels der weiteren Modellstruktur (17) den resultierenden Leistungssollwert (P1*) ermittelt.

6. Betriebsverfahren nach einem der obigen Ansprüche,
**dadurch gekennzeichnet,**
**dass** für Frequenzen (f) oberhalb einer Grenzfrequenz (f0) die mittels der jeweiligen Modellstruktur (11) ermittelten jeweiligen resultierenden Lagesollwerte (p1*) gegenüber den gleichen Frequenzanteilen des jeweiligen anfänglichen Lagesollwerts (p2*) verstärkt sind.

7. Betriebsverfahren nach einem der obigen Ansprüche,
**dadurch gekennzeichnet,**
**dass** die Modellstrukturen (11) für die Lageregler (5) derart aufeinander abgestimmt sind, dass die Spiegel (3) mit der gleichen Dynamik positioniert werden.

8. Betriebsverfahren nach einem der obigen Ansprüche,
**dadurch gekennzeichnet,**
**dass** das aus dem jeweiligen Spiegel (3), dem jeweils zugeordneten Lageregler (5) und der jeweiligen Modellstruktur (11) bestehende System eine Bandbreite aufweist, die mindestens so groß wie die Bandbreite des nur aus dem jeweiligen Spiegel (3) und dem jeweils zugeordneten Lageregler (5) bestehenden Systems ist.

9. Betriebsverfahren nach einem der obigen Ansprüche,
**dadurch gekennzeichnet,**
**dass** die Modelle (13) der Modellstrukturen (11) jeweils einen Zustandsregler implementieren.

10. Betriebsverfahren nach einem der obigen Ansprüche,
**dadurch gekennzeichnet,**
**dass** den Lagereglern (5) ein jeweiliger Drehzahlregler (6) unterlagert ist.

11. Betriebsverfahren nach einem der obigen Ansprüche,
**dadurch gekennzeichnet,**
**dass** die Anzahl an Spiegeln (3) zwei oder drei ist.

12. Steuerprogramm für eine übergeordnete Steuereinrichtung (8) einer Laseranlage, wobei das Steuerprogramm Maschinencode (10) umfasst, der von der übergeordneten Steuereinrichtung (8) unmittelbar abarbeitbar ist, wobei die Abarbeitung des Maschinencodes (10) durch die übergeordnete Steuereinrichtung (8) bewirkt, dass die übergeordnete Steuereinrichtung (8)
- anhand einer der übergeordneten Steuereinrichtung (8) vorgegebenen, von einem Brennpunkt (4) eines mittels eines Lasers (1) der Laseranlage emittierten Laserstrahls (2) abzufahrenden Bahn (B) für eine Mehrzahl von Spiegeln (3) der Laseranlage, mittels derer der Brennpunkt (4) des Laserstrahls (2) entsprechend der abzufahrenden Bahn (B) positioniert wird, zugeordneten Lagereglern (5) jeweils einen resultierenden Lagesollwert (p1*) ermittelt und den Lagereglern (5) den jeweiligen resultierenden Lagesollwert (p1*) vorgibt,
- für die Spiegel (3) und die den Spiegeln (3) zugeordneten Lageregler (5) jeweils eine Modellstruktur (11) implementiert, welche das dynamische Verhalten des jeweiligen Spiegels (3) und des jeweils zugehörigen Lagereglers (5) modelliert, und
- anhand der von dem Brennpunkt (4) des Laserstrahls (2) abzufahrenden Bahn (B) jeweils einen anfänglichen Lagesollwert (p2*) ermittelt, den jeweiligen anfänglichen Lagesollwert (p2*) der jeweiligen Modellstruktur (11) zuführt und mittels der jeweiligen Modellstruktur (11) den jeweiligen resultierenden Lagesollwert (p1*) ermittelt.

13. Steuerprogramm nach Anspruch 12,
**dadurch gekennzeichnet,**
**dass** die Abarbeitung des Maschinencodes (10) durch die übergeordnete Steuereinrichtung (8) zusätzlich bewirkt,
- **dass** die jeweilige Modellstruktur (11) in einem jeweiligen eingangsseitigen Knotenpunkt (12) den jeweiligen anfänglichen Lagesollwert (p2*) und einen Rückkoppelwert (s) zu dem jeweiligen resultierenden Lagesollwert (p1*) verknüpft, in einem dem jeweiligen eingangsseitigen Knotenpunkt (12) nachgeordneten jeweiligen Modell (13) anhand des jeweiligen resultierenden Lagesollwerts (p1*) einen jeweiligen erwarteten Lageistwert (p1) ermittelt und den jeweiligen Rückkoppelwert (s) unter Verwertung des jeweiligen erwarteten Lageistwertes (p1) ermittelt,
- **dass** die übergeordnete Steuereinrichtung (8) zusätzlich einen resultierenden Leistungssollwert (P1*) für eine von dem Laser (1) abzugebende Leistung ermittelt und den resultierenden Leistungssollwert (P1*) einem Leistungsregler (15) für den Laser (1) vorgibt,
- **dass** die übergeordnete Steuereinrichtung (8) anhand der mittels der Modellstrukturen (11) ermittelten erwarteten Lageistwerte (p1) eine Geschwindigkeit (v) ermittelt, mittels derer der Brennpunkt (4) des Laserstrahls (2) positioniert wird, und den resultierenden Leistungssollwert (P1*) unter Verwendung der ermittelten Geschwindigkeit (v) ermittelt,
- **dass** die übergeordnete Steuereinrichtung (8) für den Laser (1) und den dem Laser (1) zugeordneten Leistungsregler (15) eine weitere Modellstruktur (17) implementiert, welche das dynamische Verhalten des Lasers (1) und des zugehörigen Leistungsreglers (15) modelliert, und anhand der Geschwindigkeit (v), mittels derer der Brennpunkt (4) des Laserstrahls (2) positioniert wird, einen anfänglichen Leistungssollwert (P2*) ermittelt, den anfänglichen Leistungssollwert (P2*) der weiteren Modellstruktur (17) zuführt und mittels der weiteren Modellstruktur (17) den resultierenden Leistungssollwert (P1*) ermittelt,
- **dass** für Frequenzen (f) oberhalb einer Grenzfrequenz (f0) die mittels der jeweiligen Modellstruktur (11) ermittelten jeweiligen resultierenden Lagesollwerte (p1*) gegenüber den gleichen Frequenzanteilen des jeweiligen anfänglichen Lagesollwerts (p2*) verstärkt sind,
- **dass** die Modellstrukturen (11) für die Lageregler (5) derart aufeinander abgestimmt sind, dass die Spiegel (3) von den Lagereglern (5) mit der gleichen Dynamik positioniert werden, und/oder
- **dass** die Modelle (13) der Modellstrukturen (11) jeweils einen Zustandsregler implementieren.

14. Übergeordnete Steuereinrichtung für eine Laseranlage, die mit einem Steuerprogramm (9) nach Anspruch 12 oder 13 programmiert ist, so dass sie im Betrieb die Laseranlage gemäß einem Betriebsverfahren nach einem der Ansprüche 1 bis 11 steuert.

15. Laseranlage,
- wobei die Laseranlage einen Laser (1) aufweist, der einen Laserstrahl (2) emittiert,
- wobei die Laseranlage eine Mehrzahl von Spiegeln (3) aufweist, mittels derer ein Brennpunkt (4) des Laserstrahls (2) entsprechend einer abzufahrenden Bahn (B) positionierbar ist,
- wobei die Laseranlage den Spiegeln (3) zugeordnete Lageregler (5) aufweist, welche den Spiegel (3), dem sie jeweils zugeordnet sind, entsprechend ihnen jeweils vorgegebenen resultierenden Lagesollwerten (p1*) lagegeregelt positionieren,
- wobei die Laseranlage eine übergeordnete Steuereinrichtung (8) nach Anspruch 15 aufweist.
